# EUROPÄISCHE PATENTSCHRIFT

(11) **EP 3 361 573 B1**
(45) Veröffentlichungstag und Bekanntmachung des Hinweises auf die Patenterteilung: **28.10.2020**
(21) Anmeldenummer: 18153916.4
(22) Anmeldetag: 29.01.2018
(51) Int. Cl.: H01R 4/02, H01R 43/02

(54) **VERFAHREN ZUM VERBINDEN EINER ELEKTRISCHEN VORRICHTUNG MIT EINEM ANSCHLUSSKABEL UND ELEKTRISCHE VORRICHTUNG MIT EINEM ANSCHLUSSKABEL**
ELECTRICAL DEVICE COMPRISING A CONNECTING CABLE AND METHOD FOR CONNECTING AN ELECTRICAL DEVICE COMPRISING A CONNECTING CABLE
PROCÉDÉ DE RACCORDEMENT D'UN DISPOSITIF ÉLECTRIQUE À UN CÂBLE DE RACCORDEMENT ET DISPOSITIF ÉLECTRIQUE POURVUE D'UN CÂBLE DE RACCORDEMENT

(30) Priorität: 14.02.2017 DE 102017102912
(43) Veröffentlichungstag der Anmeldung: 15.08.2018
(73) Patentinhaber: Türk & Hillinger GmbH, 78532 Tuttlingen (DE)
(72) Erfinder: Schlipf, Andreas, 78532 Tuttlingen (DE)
(74) Vertreter: Westphal, Mussgnug & Partner Patentanwälte mbB

(56) Entgegenhaltungen:
- DE-A1- 3 234 059
- DE-A1-102007 000 315
- DE-A1-102009 026 402
- US-A- 3 839 623
- US-A- 5 034 595
- US-A1- 2006 013 282

## Beschreibung

Verfahren zum Verbinden einer elektrischen Vorrichtung mit einem Anschlusskabel und elektrische Vorrichtung mit einem Anschlusskabel.

Bislang wird zum Verbinden einer elektrischen Vorrichtung, die einen rohrförmigen Metallmantel und stirnseitig aus dem rohrförmigen Metallmantel herausragende Kontaktabschnitte von elektrischen Leitern aufweist, wie es insbesondere bei einer verdichteten oder unverdichteten gewickelten Heizpatrone oder einer PTC-Heizpatrone, einem Mantelthermoelement oder PTC-/NTC-Sensoren mit Metallmantel der Fall ist, mit einem Anschlusskabel üblicherweise zunächst eine Verbindung von insbesondere blanken, d.h. abisolierten oder unisolierten Enden von Leitern der elektrischen Heizvorrichtung, insbesondere von deren herausgeführten Anschlussdrähten oder Anschlusslitzen, die auch miteinander verdrillt oder verseilt sein können, mit den entsprechenden blanken Enden von Leitern des Anschlusskabels hergestellt, z.B. durch Schweißen, Löten, Verstemmen oder Crimpen, und dann eine Isolierung über der Verbindungsstelle angeordnet.

Dieses Anordnen der Isolierung kann beispielsweise durch einen Isolierschlauch, der über die Verbindungsstelle geschoben und gegebenenfalls aufgeschrumpft wird erfolgen. Insbesondere dann, wenn zwischen den einzelnen Leiterenden der elektrischen Heizvorrichtung nur wenig Platz vorhanden ist, erweist sich das Aufschieben der Isolierschläuche oft als schwierig und bleibt unvollständig, was dann zu Kurzschlüssen und Funktionsproblemen der elektrischen Heizvorrichtung führen kann.

Andere bisher bekannte Möglichkeiten bestehen z.B. im Einwickeln der Verbindungsstelle mit geschnittenen Folien oder Klebebändern, insbesondere Hochtemperatur-Klebebändern, was sehr arbeitsintensive Prozesse sind oder im Vergießen mit einer Vergussmasse, welche aber blanke Teile nicht immer sicher erreicht, was insbesondere dazu führen kann, dass die Dichtigkeit, z.B. gegen Dampf, nicht mehr ausreicht.

In der Praxis zeigt sich somit, dass diese bislang bekannten Vorgehensweisen sämtlich relativ zeitaufwändig und/oder fehleranfällig sind und einen erheblichen Platzbedarf fordern, so dass eine unerwünscht große unbeheizte Länge entsteht.

Aus der DE 10 2009 026 402 A1 ist es bekannt, eine Verbindung zwischen Leiterelementen einer Mantelleitung und Anschlussleitungen eines Sensors innerhalb eines aus einem elektrisch isolierenden Stoff bestehenden Isolierelements mit Aufnahmen zur Einführung dieser Leitungen, die in einem Kontaktbereich ineinander übergehen und mit einer weiteren Öffnung, die einen weiteren Zugang zum Kontaktbereich bildet, anzuordnen und eine elektrische Verbindung zwischen diesen Leitern durch die Öffnung, die den weiteren Zugang zum Kontaktbereich bildet, hindurch vorzunehmen.

Aus der US 5 034 595 ist es bekannt, die elektrische Kontaktierung des Heizleiters, die aus dem Metallmantel des Rohrheizkörpers herausragt, mit externen Anschlussleitungen dadurch zu schützen, dass ein Adapter mit einer Metallhülse und einem innerhalb der Metallhülse angeordneten Isolierstoffkörper auf den Endabschnitt des elektrischen Rohrheizkörpers aufgeschoben wird, nachdem die Verbindung hergestellt ist.

Die Aufgabe der Erfindung besteht daher darin, ein Verfahren zum Verbinden einer elektrischen Vorrichtung mit einem Anschlusskabel und elektrische Vorrichtung mit einem Anschlusskabel anzugeben, die Verbesserungen insbesondere hinsichtlich Platzbedarf in axialer und radialer Richtung, Verbindungsqualität, Prozesssicherheit und Einfachheit der Herstellung erzielt und somit eine industriell prozessfähige Fertigung erlaubt.

Diese Aufgabe wird gelöst durch ein Verfahren mit den Merkmalen des Patentanspruchs 1 und eine Vorrichtung mit den Merkmalen des Patentanspruchs 13. Vorteilhafte Weiterbildungen der Erfindung sind Gegenstand der jeweiligen Unteransprüche.

Das erfindungsgemäße Verfahren zum Verbinden einer elektrischen Vorrichtung, die einen rohrförmigen Metallmantel und stirnseitig aus dem rohrförmigen Metallmantel herausragende Kontaktabschnitte von elektrischen Leitern der elektrischen Vorrichtung aufweist, mit Kontaktabschnitten von elektrischen Leitern eines Anschlusskabels umfasst zumindest die Schritte die in dem unabhängigen Anspruch 1 beansprucht werden.

Bevorzugt ist dabei, wenn die Schritte in der angegebenen Reihenfolge ausgeführt werden. Es erfolgt also das Positionieren und Isolieren der miteinander elektrische zu kontaktierenden Abschnitte zuerst und dann erst wird die elektrische Verbindung hergestellt.

Besonders gut geeignet ist das Verfahren zur Verbindung von Heizpatronen, insbesondere verdichteten oder unverdichteten gewickelten Heizpatronen, oder PTC-Heizpatronen Mantelthermometern und PTC-/NTC-Sensoren mit einem Metallmantel.

Als Material für das Isolierelement bieten sich beispielsweise Kunststoffe, insbesondere PEEK, PFA oder FEP, PA, POM, PVC, PE, Keramik, insbesondere dichtgesintert oder porös, Silikon oder Gummi an.

Durch die Aufnahmen des Isolierelements kann eine passgenaue und reproduzierbare Positionierung der jeweiligen Kontaktabschnitte sichergestellt werden. Insbesondere können die Aufnahmen -anders als in den aus dem Stand der Technik bekannten Fällen, in denen gemeinsam in eine Isolierhülse aufgenommene Kontaktabschnitte durch Verpressen miteinander kontaktiert werden- durch Anpassung ihres Querschnitts so ausgelegt werden, dass die Kontaktabschnitte zumindest in Abschnitten dieser Aufnahmen spielfrei aufgenommen werden. Dies stellt dann auch sicher, dass bei einem Kontakt- oder Widerstandsschweißprozess die Kontaktabschnitte reproduzierbar getroffen werden, so dass der hergestellte elektrische Kontakt hervorragend reproduzierbar wird.

Vorteilhafterweise werden dabei kurze Abstände und somit kurze unbeheizte Längen ermöglicht, die insbesondere nicht länger als das Dreifache des Durchmessers des Metallmantels, bevorzugt nicht länger als das Doppelte des Durchmessers des Metallmantels und besonders bevorzugt nicht länger als der Durchmesser des Metallmantels sind.

Gleichzeitig sichert das erfindungsgemäß ausgestaltete Isolierelement die räumliche und elektrische Separation der einzelnen Leiter des Anschlusskabels und vermeidet so Kurzschlüsse. Noch weiter wird eine mechanische Entlastung der Verbindungsstellen bewirkt, die deren Stabilität auf lange Sicht verbessert.

Es wird jedoch darauf hingewiesen, dass das Wort "mindestens" in der Formulierung "Aufnahmen zur Einführung von mindestens einem Kontaktabschnitt eines elektrischen Leiters der elektrischen Vorrichtung und von mindestens einem Kontaktabschnitt eines elektrischen Leiters des Anschlusskabels" nicht nur bedeuten kann, dass mehrere Kontaktabschnitte eines elektrischen Leiters der elektrischen Vorrichtung und mehrere Kontaktabschnitte eines elektrischen Leiters des Anschlusskabels im Isolierelement bereitgestellt sein können, sondern auch die Möglichkeit umfassen kann, dass außer dem (blanken) Kontaktabschnitt auch noch ein isolierter Abschnitt des elektrischen Leiters mit eingeführt ist.

Das Einführen der Kontaktbereiche der elektrischen Vorrichtung kann grundsätzlich vor oder nach dem Einführen der Kontaktbereiche des Anschlusskabels erfolgen.

Durch das Vorsehen von Öffnungen, die einen weiteren Zugang zum Kontaktbereich bieten, im Isolierelement wird gleichzeitig die Möglichkeit, direkt und an einer exakt vorgegebenen Position die elektrische Verbindung zwischen den jeweiligen Kontaktabschnitten herzustellen, geschaffen, was die Prozesssicherheit erhöht. Zugleich stellen die Öffnungen nach dem Verbinden zumindest während des Produktionsprozesses die Möglichkeit bereit, die elektrische Verbindung und gegebenenfalls ihre Eigenschaften zu überprüfen, was eine vereinfachte Qualitätssicherung ermöglicht.

Gemäß einer bevorzugten Ausführungsform des Verfahrens ist vorgesehen, dass mindestens ein Kontaktabschnitt eines elektrischen Leiters der elektrischen Vorrichtung oder des Anschlusskabels so weit in eine Aufnahme des Isolierelements eingeführt wird, dass ein sich an den Kontaktabschnitt anschließender, isolierter Abschnitt des elektrischen Leiters in das Isolierelement eintaucht. Dies stellt sicher, dass optimaler Masseschutz realisiert wird.

Bevorzugt ist dabei, wenn die entsprechende Aufnahme des Isolierelements einführseitig (also auf der Seite, von der der betreffende Kontaktabschnitt in die Aufnahme eingeführt wird) eine Einführhilfe und/oder einen Anschlag aufweist, weil dadurch bei einer vorgegebenen Länge des Kontaktabschnitts die Tiefe, bis zu der er eingeführt wird, leicht reproduziert werden kann, was ebenfalls zu einer wünschenswerten Vereinheitlichung der Eigenschaften verschiedener auf diese Weise hergestellter Verbindungen beiträgt.

Das Herstellen einer elektrischen Verbindung zwischen den jeweiligen Kontaktabschnitten kann dank der im Isolierelement vorgesehenen Öffnung(en) auf bewährte Weise durch Schweißen, Löten, Vercrimpen, Verkleben oder Verstemmen erfolgen.

Wenn beim Einführen das Isolierelement so positioniert wird, dass das Isolierelement am rohrförmigen Mantel der elektrischen Vorrichtung ansteht oder in diesen in definierter Weise eintaucht, wird einerseits die Knickstabilität weiter verbessert und andererseits erneut die erzielte Positioniergenauigkeit und Reproduzierbarkeit der elektrischen Verbindung verbessert. Unter "anstehen" wird dabei nicht nur ein unmittelbarer Kontakt verstanden, sondern auch eine Positionierung in hinreichend kleinem Abstand, dass ein Kurz- oder Masseschluss sicher vermieden ist.

Besonders bevorzugt ist es, wenn nach dem Herstellen der elektrischen Verbindung die mindestens eine Öffnung zumindest teilweise verschlossen wird. Dies kann beispielsweise dadurch geschehen, dass die Öffnung verkittet oder mit Silikonkautschuk, Epoxidharz, Kunststoff oder Keramik ausgegossen oder ausgespritzt wird. Es kann auch eine Abdeckung aus Kunststoff oder Keramik zu diesem Zweck verwendet werden. Auf diese Weise wird die hergestellte elektrische Verbindung vor äußeren Einflüssen sicher geschützt und sichergestellt, dass auch an der Verbindungsstelle kein Kurzschluss entstehen kann.

Gemäß einer vorteilhaften Weiterbildung des Verfahrens ist vorgesehen, dass eine Erdung der elektrischen Vorrichtung durch Verbindung mit einem außerhalb des Isolierelements verlaufenden Masseleiter des Anschlusskabels erfolgt. Dadurch, dass der Masseleiter außerhalb des Isolierelements verläuft, wird das Risiko vor einem ungewollten Kurzschluss zwischen Masseleitern und anderen Leitern reduziert. Für viele Anwendungen ist es bevorzugt, wenn mit dem Masseleiter der Metallmantel der elektrischen Vorrichtung auf ein definiertes Erdpotential gelegt wird. Natürlich kann eine solche Erdung auch innerhalb des Isolierelements erfolgen, das dann bevorzugt ein weiteres Paar von Aufnahmen für die Masseleiter aufweist.

Erfindungsgemäß wird eine Hülse auf das Anschlusskabel aufgeschoben und nach dem Herstellen der elektrischen Verbindung so positioniert, dass sie das Isolierelement ganz oder teilweise umschließt. Diese Hülse, die als metallisches Drehteil oder Rohrstück, aber auch als Kunststoffhülse ausgeführt sein kann, kann kurz ausgeführt werden und erfordert insbesondere dann nur minimale Bauraumerfordernissen, wenn sie den Metallmantel der elektrischen Vorrichtung in radialer Richtung betrachtet weder nach außen noch nach innen überragt.

Die Hülse erfüllt mehrere Funktionen:
Einerseits erhöht sie den Schutz des Isolierelements und der in dessen Kontaktbereich hergestellten elektrischen Verbindung schon für sich genommen weiter. Der Stabilitätsgewinn, der so erzielt wird, wird weiter vergrößert, wenn die Hülse nach dem Herstellen der elektrischen Verbindung auch so positioniert wird, dass sie mit dem Rohrmantel in Kontakt steht, und zwar in besonderem Maße, wenn die Hülse, nachdem sie so positioniert wurde, dass sie mit dem Rohrmantel in Kontakt steht, an dem Rohrmantel befestigt wird, z.B. bei einer Hülse aus Metall mit diesem verschweißt wird.

Andererseits wird durch das Vorhandensein einer solchen Hülse ermöglicht, dass Hohlräume zwischen Hülse und Isolierelement ganz oder teilweise mit Silikonkautschuk oder einem Epoxidharz ausgegossen werden oder mit einem Isoliermittel ausgeschäumt oder ausgegossen werden. Dies führt zu einer mechanischen Stabilisierung, noch weiter verbesserter elektrischer Isolation und zu einer Fixierung des Isolierelements in einer definierten Position. Zudem wird eine verbesserte Dichtigkeit gegen Feuchtigkeit und Dämpfe erreicht.

Noch weiter führt und zentriert die Hülse die Verbindungsleitung am Austritt der Hülse, was eine weitere Reduktion der mechanischen Belastung der elektrischen Verbindung mit sich bringt.

Die erfindungsgemäße elektrische Vorrichtung, bei der es sich insbesondere bevorzugt um eine Heizpatrone, ein Mantelthermoelement oder einen PCT-/NCT-Sensor mit Metallmantel handelt, weist einen rohrförmigen Metallmantel und stirnseitig aus dem rohrförmigen Metallmantel herausragende Kontaktabschnitte von elektrischen Leitern der elektrischen Vorrichtung auf, die mit Kontaktabschnitten von elektrischen Leitern eines Anschlusskabels verbunden sind.

Die erfindungsgemäße elektrische Vorrichtung weist ferner ein aus einem elektrisch isolierenden Stoff bestehendes Isolierelement mit Aufnahmen zur Einführung von mindestens einem Kontaktabschnitt eines elektrischen Leiters der elektrischen Vorrichtung und von mindestens einem Kontaktabschnitt eines elektrischen Leiters des Anschlusskabels auf, wobei die Aufnahmen in einem Kontaktbereich ineinander übergehen. Erfindungswesentlich ist, dass das Isolierelement mindestens eine weitere Öffnung, die einen weiteren Zugang zum Kontaktbereich bildet, aufweist, wobei eine elektrische Verbindung zwischen den jeweiligen Kontaktabschnitten im Bereich der Öffnung, die den weiteren Zugang zum Kontaktbereich bildet, hergestellt ist, dadurch gekennzeichnet , dass das Isolierelement ganz oder teilweise von einer Hülse umschlossen ist.

Durch das Vorsehen von Öffnungen im Isolierelement, die einen weiteren Zugang zum Kontaktbereich bieten, wird gleichzeitig die Möglichkeit, direkt und an einer exakt vorgegebenen Position die elektrische Verbindung zwischen den jeweiligen Kontaktabschnitten herzustellen, geschaffen, was die Prozesssicherheit erhöht. Zugleich stellen die Öffnungen nach dem Verbinden zumindest während des Produktionsprozesses die Möglichkeit bereit, die elektrische Verbindung und gegebenenfalls ihre Eigenschaften zu überprüfen, was eine vereinfachte Qualitätssicherung ermöglicht.

Gleichzeitig kann durch die Aufnahmen des Isolierelements eine passgenaue und reproduzierbare Positionierung der jeweiligen Kontaktabschnitte sichergestellt werden. Insbesondere können sie durch Anpassung ihres Querschnitts so ausgelegt werden, dass die Kontaktabschnitte zumindest in Abschnitten dieser Aufnahmen spielfrei aufgenommen werden.

Gemäß einer vorteilhaften Weiterbildung der Erfindung ist die weitere Öffnung des Isolierelements ganz oder teilweise ausgefüllt, abgedeckt oder verschlossen. Dies kann beispielsweise dadurch realisiert werden, dass die Öffnung verkittet oder mit Silikonkautschuk, Epoxidharz, Kunststoff oder Keramikmasse ausgegossen oder ausgespritzt wird. Es kann auch eine Abdeckung aus Kunststoff oder Keramik zu diesem Zweck verwendet werden. Auf diese Weise wird die hergestellte elektrische Verbindung vor äußeren Einflüssen wie z.B. dem Eindringen von Feuchtigkeit, Gasen oder Dämpfen sicher geschützt und sichergestellt, dass auch an der Verbindungsstelle kein Kurzschluss entstehen kann.

Das Isolierelement ist bevorzugt so beschaffen, dass die Aufnahmen zur Einführung von mindestens einem Kontaktabschnitt eines elektrischen Leiters der elektrischen Vorrichtung und von mindestens einem Kontaktabschnitt eines elektrischen Leiters des Anschlusskabels die jeweiligen Kontaktabschnitte so führen, dass sie sich im Kontaktbereich überlappen.

Wenn die Aufnahmen zur Einführung von mindestens einem Kontaktabschnitt eines elektrischen Leiters der elektrischen Vorrichtung und die Aufnahmen zur Einführung von mindestens einem Kontaktabschnitt eines elektrischen Leiters des Anschlusskabels einen unterschiedlichen Querschnitt aufweisen, ist eine Optimierung des elektrischen Kontakts insbesondere beim Schweißen durch präzise Lagedefinition prozesssicher gewährleistet.

Erfindungsgemäß ist das Isolierelement ganz oder teilweise von einer Hülse umschlossen, d.h. in im Wesentlichen radialer Richtung zur Verlaufsrichtung des Kabels liegt ein Abschnitt der Hülse. Diese Hülse, die als metallisches Drehteil oder Rohrstück, aber auch als Kunststoffhülse ausgeführt sein kann, erfüllt mehrere Funktionen:
Einerseits erhöht sie den Schutz des Isolierelements und der in dessen Kontaktbereich hergestellten elektrischen Verbindung schon für sich genommen weiter. Der Stabilitätsgewinn, der so erzielt wird, wird weiter vergrößert, wenn die Hülse nach dem Herstellen der elektrischen Verbindung auch so positioniert wird, dass sie mit dem Rohrmantel in Kontakt steht, und zwar in besonderem Maße, wenn die Hülse, nachdem sie so positioniert wurde, dass sie mit dem Rohrmantel in Kontakt steht, an dem Rohrmantel befestigt wird, z.B. bei einer Hülse aus Metall mit diesem verschweißt wird.

In der letztgenannten Konfiguration ist es insbesondere auch möglich, dass ein definiertes Potential des Metallmantels der elektrischen Vorrichtung durch eine Massenleitung des Anschlusskabels, die außerhalb des Isolierelements verläuft und die in elektrischen Kontakt mit der Hülse gebracht wird, die dann in elektrisch leitender Verbindung zum Metallmantel steht, erzeugt wird. Dies hat den großen Vorteil, dass ein Kurzschluss zwischen Massenleitung und einer stromführenden Leitung der elektrischen Vorrichtung sicher vermieden werden kann.

Andererseits wird durch das Vorhandensein einer solchen Hülse ermöglicht, dass Hohlräume zwischen Hülse und Isolierelement ganz oder teilweise mit Silikonkautschuk oder einem Epoxidharz ausgegossen werden oder mit einem Isoliermittel ausgeschäumt oder ausgegossen werden. Dies führt zu einer mechanischen Stabilisierung, noch weiter verbesserter elektrischer Isolation und zu einer Fixierung des Isolierelements in einer definierten Position.

Die Erfindung wird nachfolgend anhand von Figuren, die Ausführungsbeispiele zeigen, näher erläutert. Es zeigen:
- Fig. 1a:: Ein erstes Stadium eines exemplarischen erfindungsgemäßen Verfahrens,
- Fig. 1b:: ein zweites Stadium des exemplarischen erfindungsgemäßen Verfahrens,
- Fig. 1c:: ein drittes Stadium des exemplarischen erfindungsgemäßen Verfahrens,
- Fig. 1d:: ein viertes Stadium des exemplarischen erfindungsgemäßen Verfahrens,
- Fig. 1e:: ein fünftes Stadium des exemplarischen erfindungsgemäßen Verfahrens, wobei das Isolierelement geöffnet gezeigt ist,
- Fig. 1f:: ein sechstes Stadium des exemplarischen erfindungsgemäßen Verfahrens,
- Fig. 2:: eine Ausschnittsvergrößerung der Figur 1e,
- Fig. 3:: einen Querschnitt durch die Kontaktbereiche eines Isolierelements einer fertiggestellten elektrischen Vorrichtung mit Anschlusskabel, und
- Fig. 4:: eine alternative Ausführungsform eines Isolierelements.

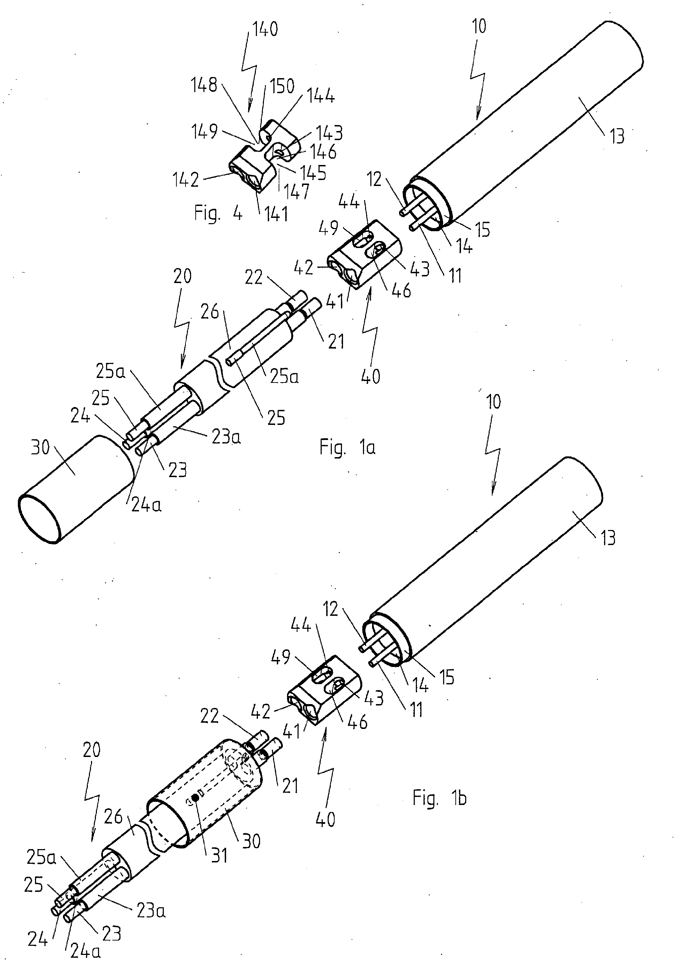

Figur 1a zeigt ein erstes Stadium eines exemplarischen Verfahrens zum Verbinden einer in diesem Beispiel als Heizpatrone ausgeführten elektrischen Vorrichtung 10, die einen rohrförmigen Metallmantel 13 und stirnseitig aus dem rohrförmigen Metallmantel 13 herausragende Kontaktabschnitte 11, 12 von elektrischen Leitern der elektrischen Vorrichtung aufweist, mit Kontaktabschnitten 21,22 von elektrischen Leitern 23,24 eines Anschlusskabels 20, die gemeinsam mit einem Masseleiter 25 in einer Hülle 26 angeordnet sind. In dem gezeigten Verfahrensstadium sind die einzelnen Komponenten bereitgestellt; insofern entspricht die Figur 1a zugleich einer partiellen Explosionsdarstellung der elektrischen Vorrichtung 10 mit Anschlusskabel 20.

Anzumerken ist dabei noch, dass nur der der elektrischen Vorrichtung 10 zugewandte Teil des Anschlusskabels 20 dargestellt ist, wobei zudem das von der elektrischen Vorrichtung 10 abgewandte Ende des dargestellten Abschnitts des Anschlusskabels 20 ohne Hülle dargestellt ist, um Aufbau, Anordnung und Verlauf der elektrischen Leiter 23,24 mit der sie umgebenden Isolierschicht 23a,24a und des Masseleiters 25 mit der ihn umgebenden Isolierschicht 25a im Anschlusskabel 20 klarer darzustellen.

Da es sich im dargestellten Beispiel bei der elektrischen Vorrichtung 10 um eine Heizpatrone handelt, ist der elektrische Leiter hier ein Heizleiter, der beispielsweise in eine verdichtete Magnesiumoxid-Füllung 14 eingebettet sein kann. Im dem Anschlusskabel 20 zugewandten Endbereich des rohrförmigen Metallmantels 13 ist dieser durch Reduktion der Manteldicke geschwächt, so dass ein ringförmiger, im Vergleich zum Außendurchmesser des Metallmantels 13 abgestufter Endabschnitt 15 vorliegt, der über die Magnesiumoxid-Füllung 14 hinaus ragt.

Das der elektrischen Vorrichtung 10 zugewandte Ende des Anschlusskabels 20 ist bereits für den Anschluss an die elektrische Vorrichtung 10 vorbereitet, indem die Kontaktabschnitte 21,22 durch Entfernen eines Abschnitts der jeweiligen Isolierschichten 23a,24a auf einer definierte Länge freigelegt wurden, also dort blank sind. Ferner ist ein Abschnitt des Masseleiters 25 zurückgebogen.

Außer der elektrischen Vorrichtung 10 und dem Anschlusskabel 20 sind noch eine hier als Metallhülse ausgestaltete Hülse 30, deren Außendurchmesser hier dem Außendurchmesser des Metallmantels 13 entspricht und deren Innendurchmesser so gewählt ist, dass sie auf den abgestuften Endabschnitt 15 des Metallmantels 13 aufschiebbar ist und ein Isolierelement 40 in Figur 1a zu sehen.

Das Isolierelement 40 weist in diesem Ausführungsbeispiel auf der dem Anschlusskabel 20 zugewandten Seite zwei Aufnahmen 41,42 zur Einführung der Kontaktabschnitte 21,22 der elektrischen Leiter 23,24 des Anschlusskabels 20 und auf der der elektrischen Vorrichtung 10 zugewandten Seite zwei Aufnahmen 43,44 zur Einführung der Kontaktabschnitte 11, 12 der elektrischen Leiter der elektrischen Vorrichtung auf. Die Aufnahmen 41,42,43,44 können beispielsweise jeweils als Bohrung realisiert werden.

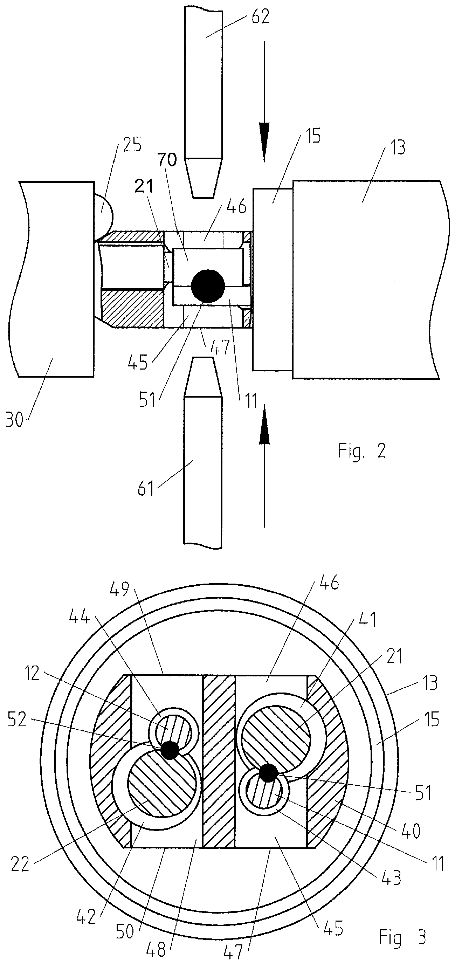

Wie insbesondere bei Berücksichtigung der Figuren 2 und 3 deutlich wird, verlaufen dabei die Aufnahmen 41 und 43, die ein miteinander in elektrischen Kontakt zu bringendes Paar von Kontaktabschnitten 11,21 aufnehmen, mit einem Höhenversatz zueinander und haben einen unterschiedlichen Querschnitt.

Die Aufnahmen 41 und 43 gehen in einem Kontaktbereich 45 ineinander über, in dem dann die Kontaktabschnitte 11,21 miteinander überlappen. Optional kann, z.B. wenn einer der Kontaktabschnitte zu einem Leiter aus schlecht schweißbarem Material besteht, auch eine Crimp- oder Schweißhülse 70 vorgesehen sein.

Die Öffnungen 46,47 des Isolierelements 40 schaffen einen separaten Zugang zum Kontaktbereich 45, durch den hindurch dann die elektrische Verbindung 51, die symbolisch als schwarzer Punkt dargestellt ist, erfolgen bzw. erzeugt werden kann, z.B. durch Punkt- oder Widerstandsschweißen. Dabei wird durch die Führung der Aufnahmen sichergestellt, dass die elektrische Verbindung gut reproduzierbar ist, weil die Pressstempel oder Schweißstempel 61,62 auf stets gleich positionierte Kontaktabschnitte 11,21 treffen.

In dem gleichen Prinzip folgender Weise gehen auch die Aufnahmen 42 und 44 gehen in einem Kontaktbereich 48 ineinander über, in dem dann die Kontaktabschnitte 12,22 miteinander überlappen. Die Öffnungen 49,50 des Isolierelements 40 schaffen einen separaten Zugang zum Kontaktbereich 48, durch den hindurch dann die ebenfalls symbolisch als schwarzer Punkt dargestellte elektrische Verbindung 52 erfolgen bzw. erzeugt werden kann.

Allerdings ist im gezeigten Ausführungsbeispiel ein Höhenversatz einerseits zwischen den Aufnahmen 41 und 42 und andererseits zwischen den Aufnahmen 43 und 44 vorgesehen. Gleichzeitig ist dieser Höhenversatz auf eine Weise realisiert, die dazu führt, dass die Aufnahme 41 oberhalb der Aufnahme 43 verläuft, aber die Aufnahme 42 unterhalb der Aufnahme 44. Es besteht also auch jeweils ein Höhenversatz zwischen den verschiedenen Aufnahmen 41,42 für die Kontaktbereiche 21,22 der elektrischen Leiter 23,24 des Anschlussleiters 20 und ein Höhenversatz zwischen den verschiedenen Aufnahmen 43,44 für die Kontaktbereiche 11, 12 der elektrischen Leiter der elektrischen Vorrichtung 10. Dadurch wird es möglich, den zur Verfügung stehenden Querschnitt des Isolierelements 40 optimal zu nutzen.

Das alternative, in Figur 4 dargestellte Isolierelement 140 ist weitgehend identisch aufgebaut, so dass auf die Beschreibung des Isolierelements 40 verwiesen werden kann, wobei die Bezugszeichen sich durch Addition von 100 zu den dort verwendeten Bezugszeichen ergeben. Der Unterschied ist lediglich, dass die Öffnungen 46,47,49,50 fensterartig sind, während die Öffnungen 146,147,149,150 keinen umlaufenden Rand aufweisen, sondern als Ausnehmung ausgestaltet sind.

In dem in Figur 1b dargestellten Stadium des Verfahrens ist die Hülse 30 auf das Anschlusskabel 20 aufgeschoben worden und der Masseleiter 25 mit einer elektrischen Verbindung 31, die z.B. durch Löten oder Schweißen realisiert werden kann, auf der Innenseite der Hülse 30 mit dieser verbunden worden.

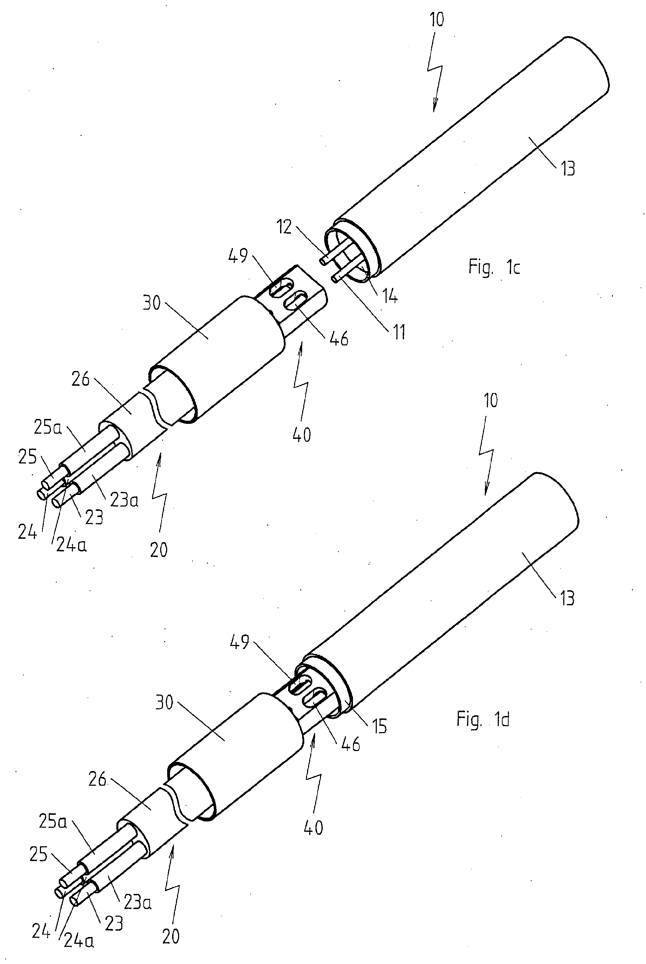

In dem in Figur 1c dargestellten Stadium des Verfahrens sind die Kontaktabschnitte 21,22 der elektrischen Leiter 23,24 des Anschlusskabels 20 in die Aufnahmen 41,42 des Isolierelements 40 eingeschoben worden. In dem in Figur 1d dargestellten Stadium des Verfahrens sind dann zusätzlich auch die Kontaktabschnitte 11, 12 von Leitern der elektrischen Vorrichtung eingeschoben, wobei das Isolierelement 40 partiell in den Rohrmund des rohrförmigen Metallmantels 13 eintaucht und dabei insbesondere in Anschlag mit der Oberfläche der verdichteten Magnesiumoxid-Füllung 14 gebracht werden kann. Damit kann, insbesondere im Zusammenwirken mit einer definierter Länge der Kontaktabschnitte 21,22 und Verwendung der Isolierung der an diese angrenzenden Abschnitte der Leiter des Anschlusskabels 20 als Anschlag eine hohe und leicht reproduzierbare Positioniergenauigkeit erreicht werden.

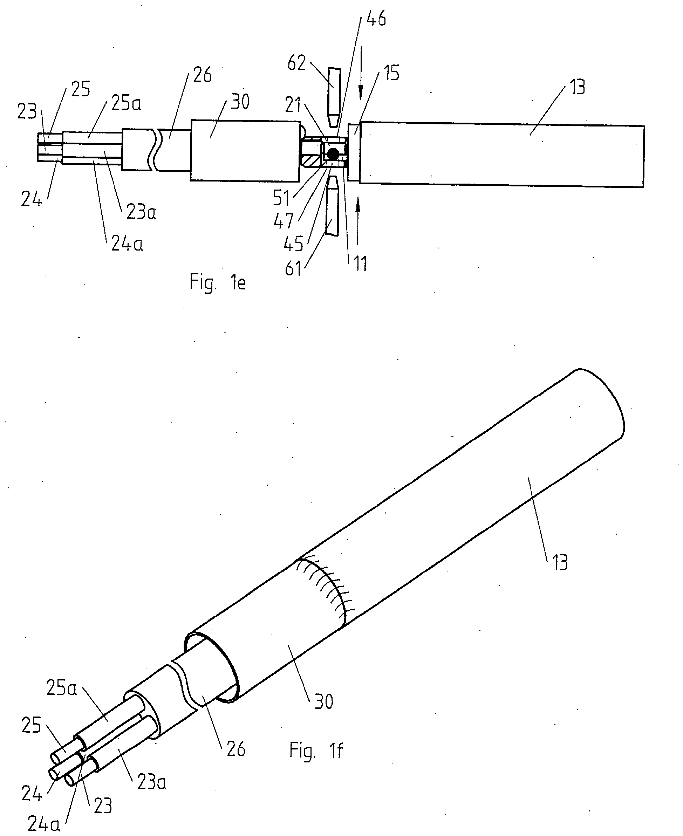

In Figur 1e ist schematisch der Vorgang des Herstellens der elektrischen Verbindung, exemplarisch durch Verpressen oder Verschweißen mittels Pressstempeln oder Schweissstempeln 61,62, die jeweils durch die Öffnungen 46,47 in den Kontaktbereich 45 eintauchen, wie durch die Pfeile veranschaulicht ist, dargestellt. Optional können danach die Öffnungen 46,47 bzw. 49,50 verschlossen werden, ehe weitere Schritte erfolgen.

Um zum in Figur 1f dargestellten sechsten Stadium des Verfahrens zu gelangen, wird dann noch die Hülse 30 auf den abgestuften Endabschnitt 15 des Metallmantels 13 der elektrischen Vorrichtung 10 aufgeschoben und dort befestigt, z.B. verschweißt. Damit liegt dann auch der Metallmantel 13 auf Masse. Zugleich ist das Isolierelement 40 nun von der Hülse 30 umschlossen. Dies ermöglicht es auch, verbleibende Hohlräume zwischen Hülse und Isolierelement ganz oder teilweise mit Silikonkautschuk oder einem Epoxidharz auszugiessen oder mit einem Isoliermittel auszugießen oder auszuschäumen.

### Bezugszeichenliste

- 10: elektrische Vorrichtung
- 11,12: Kontaktabschnitt
- 13: Metallmantel
- 14: Magnesiumoxid-Füllung
- 15: Endabschnitt

- 20: Anschlusskabel
- 21,22: Kontaktabschnitt
- 23,24: elektrischer Leiter
- 23a,24a,25a: Isolierschicht
- 25: Masseleiter
- 26: Hülle

- 30: Hülse
- 31: elektrischer Kontakt

- 40: Isolierelement
- 41,42,43,44: Aufnahme
- 46,47,49,50: Öffnung
- 45,48: Kontaktbereich
- 51,52: elektrische Verbindung

- 61,62: Presstempel oder Schweißstempel
- 70: Crimp- oder Schweißhülse
- 140: Isolierelement
- 141,142,143,144: Aufnahme
- 146,147,149,150: Öffnung
- 145,148: Kontaktbereich

## Patentansprüche

1. Verfahren zum Verbinden einer elektrischen Vorrichtung (10), die einen rohrförmigen Metallmantel (13) und stirnseitig aus dem rohrförmigen Metallmantel (13) herausragende Kontaktabschnitte (11, 12) von elektrischen Leitern der elektrischen Vorrichtung (10) aufweist, mit Kontaktabschnitten (21,22) von elektrischen Leitern (23,24) eines Anschlusskabels (20) mit den Schritten:
- Bereitstellen eines aus einem elektrisch isolierenden Stoff bestehenden Isolierelements (40, 140) mit Aufnahmen (41,42,43,44,141,142,143,144) zur Einführung von mindestens einem Kontaktabschnitt (11, 12) eines elektrischen Leiters der elektrischen Vorrichtung (10) und von mindestens einem Kontaktabschnitt (21,22) eines elektrischen Leiters (23,24) des Anschlusskabels (20), wobei die Aufnahmen (41,42,43,44,141,142,143,144) in einem Kontaktbereich (45,48,145,148) ineinander übergehen und mit mindestens einer Öffnung (46,47,49,50,146,147,149,150), die einen weiteren Zugang zum Kontaktbereich (45,48,145,148) bildet,
- Einführen mindestens eines Kontaktabschnitts (11, 12) eines elektrischen Leiters der elektrischen Vorrichtung (10) und mindestens eines Kontaktabschnitts (21,22) eines elektrischen Leiters (23,24) des Anschlusskabels (20) in Aufnahmen (41,42,43,44,141,142,143,144) des Isolierelements, so dass die jeweiligen Kontaktabschnitte (11,21,12,22) in den Kontaktbereich (45,48,145,148) hineinragen oder einander dort überlappen oder dort aneinander angrenzen, und
- Herstellen einer elektrischen Verbindung (51,52) zwischen den jeweiligen Kontaktabschnitten (11,21,12,22), wobei das Herstellen dieser elektrischen Verbindung (51,52) durch die Öffnung (46,47,49,50,146,147,149,150), die den weiteren Zugang zum Kontaktbereich (45,48,145,148) bildet, hindurch erfolgt,
**dadurch gekennzeichnet, dass** eine Hülse (30) auf das Anschlusskabel (20) aufgeschoben wird und nach dem Herstellen der elektrischen Verbindung (51, 52) so positioniert wird, dass sie das Isolierelement (40, 140) ganz oder teilweise umschließt.

2. Verfahren nach Anspruch 1,
**dadurch gekennzeichnet, dass** mindestens ein Kontaktabschnitt (11,12,21,22) eines elektrischen Leiters der elektrischen Vorrichtung (10) oder des Anschlusskabels (20) so weit in eine Aufnahme (41,42,43,44, 141,142,143,144) des Isolierelements (40, 140) eingeführt wird, dass ein sich an den Kontaktabschnitt (11,12,21,22) anschließender, isolierter Abschnitt des elektrischen Leiters in das Isolierelement (40, 140) eintaucht.

3. Verfahren nach Anspruch 1 oder 2,
**dadurch gekennzeichnet, dass** Kontaktabschnitte (11,12,21,22) von mehr als einem elektrischen Leiter der elektrischen Vorrichtung (10) hinreichend weit in Aufnahmen (41,42,43,44,141,142,143,144) des Isolierelements (40, 140) eingeführt werden, dass der Abstand zwischen den Aufnahmen (41,42,43,44,141,142,143,144) den Kontakt zwischen unterschiedlichen Kontaktabschnitten verhindert.

4. Verfahren nach einem der Ansprüche 1 bis 3,
**dadurch gekennzeichnet, dass** das Herstellen einer elektrischen Verbindung (51,52) zwischen den jeweiligen Kontaktabschnitten (11,21,12,22) durch Schweißen, Löten, Vercrimpen, Verkleben oder Verstemmen erfolgt.

5. Verfahren nach einem vorstehenden Anspruch,
**dadurch gekennzeichnet, dass** beim Einführen mindestens eines Kontaktabschnitts (11, 12, 21, 22) das Isolierelement (40,140) so positioniert wird, dass der Abstand zwischen Isolierelement (40, 140) und rohrförmigem Metallmantel (13) der elektrischen Vorrichtung (10) kleiner als das Dreifache von dessen Durchmesse ist.

6. Verfahren nach Anspruch 5,
**dadurch gekennzeichnet, dass** beim Einführen mindestens eines Kontaktabschnitts (11, 12, 21, 22) das Isolierelement (40,140) so positioniert wird, dass das Isolierelement (40, 140) am rohrförmigen Metallmantel (13) der elektrischen Vorrichtung (10) ansteht oder in diesen eintaucht.

7. Verfahren nach einem vorstehenden Anspruch,
**dadurch gekennzeichnet, dass** nach dem Herstellen der elektrischen Verbindung (51,52) die mindestens eine Öffnung (46,47,49,50,146,147,149,150) zumindest teilweise verschlossen wird.

8. Verfahren nach einem vorstehenden Anspruch,
**dadurch gekennzeichnet, dass** eine Erdung der elektrischen Vorrichtung (10) durch Verbindung mit einem außerhalb des Isolierelements (40) verlaufenden Masseleiter (25) des Anschlusskabels (20) erfolgt.

9. Verfahren nach einem vorstehenden Anspruch,
**dadurch gekennzeichnet, dass** die Hülse (30) nach dem Herstellen der elektrischen Verbindungen (51, 52) auch so positioniert wird, dass sie mit dem rohrförmigen Metallmantel (13) in Kontakt steht.

10. Verfahren nach Anspruch 9,
**dadurch gekennzeichnet, dass** die Hülse (30) nachdem sie so positioniert wurde, dass sie mit dem rohrförmigen Metallmantel (13) in Kontakt steht, an dem rohrförmigen Metallmantel (13) befestigt wird.

11. Verfahren nach einem der vorstehenden,
**dadurch gekennzeichnet, dass** Hohlräume zwischen Hülse (30) und Isolierelement (40, 140) ganz oder teilweise mit Silikonkautschuk oder einem Epoxidharz ausgegossen werden oder mit einem Isoliermittel ausgeschäumt oder ausgegossen werden.

12. Verfahren nach einem der vorstehenden,
**dadurch gekennzeichnet, dass** die Hülse (30) so dimensioniert ist und so positioniert wird, dass der rohrförmige Metallmantel (13) und die Hülse (30) fluchten, derart dass ein radialer Überstand zwischen ihnen nicht besteht oder geringer ist als die Wandstärke des rohrförmigen Metallmantels (13).

13. Elektrische Vorrichtung (10), die einen rohrförmigen Metallmantel (13) und stirnseitig aus dem rohrförmigen Metallmantel (13) herausragende Kontaktabschnitte (11, 12) von elektrischen Leitern der elektrischen Vorrichtung (10) aufweist, die mit Kontaktabschnitten (21,22) von elektrischen Leitern (23,24) eines Anschlusskabels (20) verbunden sind, wobei die elektrische Vorrichtung (10) ferner ein aus einem elektrisch isolierenden Stoff bestehendes Isolierelement (40, 140) mit Aufnahmen (41,42,43,44,141,142, 143, 144) zur Einführung von mindestens einem Kontaktabschnitt (11, 12) eines elektrischen Leiters der elektrischen Vorrichtung und von mindestens einem Kontaktabschnitt (21,22) eines elektrischen Leiters (23,24) des Anschlusskabels (20) aufweist, wobei die Aufnahmen (41,42, 43,44,141,142,143,144) in einem Kontaktbereich (45,48,145, 148) ineinander übergehen, wobei das Isolierelement (40, 140) mindestens eine weitere Öffnung (46, 47,49,50,146,147,149,150), die einen weiteren Zugang zum Kontaktbereich (45,48,145,148) bildet, aufweist, wobei eine elektrischen Verbindung (51,52) zwischen den jeweiligen Kontaktabschnitten (11,21,12,22) im Bereich der Öffnung (46,47,49,50,146,147,149,150), die den weiteren Zugang zum Kontaktbereich (45,48,145,148) bildet, hergestellt ist, **dadurch gekennzeichnet, dass** das Isolierelement (40, 140) ganz oder teilweise von einer Hülse (30) umschlossen ist.

14. Elektrische Vorrichtung (10) nach Anspruch 13,
**dadurch gekennzeichnet, dass** die weitere Öffnung (46, 47, 49, 50, 146, 147, 149, 150) eine Aussparung, eine Sacklochbohrung oder eine durchgängige Bohrung ist.

15. Elektrische Vorrichtung (10) nach Anspruch 13 oder 14,
**dadurch gekennzeichnet, dass** die weitere Öffnung (46, 47, 49, 50, 146, 147, 149, 150) des Isolierelements (40, 140) ganz oder teilweise ausgefüllt, abgedeckt oder verschlossen ist.

16. Elektrische Vorrichtung (10) nach einem der Ansprüche 13 bis 15,
**dadurch gekennzeichnet, dass** die Aufnahmen (41,42,43,44,141,142,143,144) zur Einführung von mindestens einem Kontaktabschnitt (11, 12) eines elektrischen Leiters der elektrischen Vorrichtung (10) und von mindestens einem Kontaktabschnitt (21,22) eines elektrischen Leiters (23,24) des Anschlusskabels (20) die jeweiligen Kontaktabschnitte (11,21,12,22) so führen, dass sie sich im Kontaktbereich (45,48,145,148) überlappen.

17. Elektrische Vorrichtung (10) nach einem der Ansprüche 13 bis 16,
**dadurch gekennzeichnet, dass** die Aufnahmen (43,44,143,144) zur Einführung von mindestens einem Kontaktabschnitt (11, 12) eines elektrischen Leiters der elektrischen Vorrichtung (10) und die Aufnahmen (41,42, 141, 142) zur Einführung von mindestens einem Kontaktabschnitt (21,22) eines elektrischen Leiters (23,24) des Anschlusskabels (20) einen unterschiedlichen Querschnitt aufweisen.

18. Elektrische Vorrichtung (10) nach einem der Ansprüche 13 bis 17,
**dadurch gekennzeichnet, dass** die Hülse (30) kürzer als das Dreifache des größten Durchmessers des rohrförmigen Metallmantels (13) ist und/oder dass die Hülse (30) den rohrförmigen Metallmantel (13) in radialer Richtung weder nach außen noch nach innen überragt.

19. Elektrische Vorrichtung (10) nach einem der Ansprüche 13 bis 18,
**dadurch gekennzeichnet, dass** Hohlräume zwischen Isolierelement (40, 140) und Hülse (30) zumindest teilweise mit Silikonkautschuk oder Epoxidharz ausgegossen oder mit einem Isoliermittel ausgeschäumt oder ausgegossen sind.

20. Elektrische Vorrichtung (10) nach einem der Ansprüche 13 bis 19,
**dadurch gekennzeichnet, dass** die Hülse (30) im Kontakt mit dem rohrförmigen Metallmantel (13) steht und mit diesem verbunden ist.

## Claims

1. Method for connecting an electrical device (10), which comprises a tubular metal casing (13) and contact segments (11, 12) of electrical conductors of the electrical device (10) extending from its front end, to contact segments (21, 22) of electrical conductors (23, 24) of a connection cable (20), having the steps:
- Providing an insulation element (40, 140), composed of an electrically insulating material, which has inlets (41, 42, 43, 44, 141, 142, 143, 144) for the insertion of at least one contact segment (11, 12) of an electrical conductor of the electrical device (10) and of at least one contact segment (21, 22) of an electrical conductor (23, 24) of the connection cable (20), wherein the inlets (41, 42 43, 44, 141, 142, 143, 144) transition into each other in a contact region (45, 48, 145, 148) and which has at least one opening (46, 47, 49, 50, 146, 147, 149, 150) that provides further access to the contact region (45, 48, 145, 148),
- inserting at least one contact segment (11, 12) of an electrical conductor of the electrical device (10) and at least one contact segment (21, 22) of an electrical conductor (23, 24) of the connection cable (20) into the inlets (41, 42, 43, 44, 141, 142, 143, 144) of the insulation element such that the respective contact segments (11, 21, 12, 22) extend into the contact region (45, 48, 145, 148), or overlap each other there, or adjoin each other there, and
- establishing an electrical connection (51, 52) between the respective contact segments (11, 21, 12, 22), wherein this electrical connection (51, 52) is established through the opening (46, 47, 49, 50, 146, 147, 149, 150) that provides the further access to the contact region (45, 48, 145, 148),
**characterized in that** a sleeve (30) is pushed onto the connection cable (20) and, after the electrical connection (51, 52) is established, is positioned to entirely or partially enclose the insulation element (40, 140).

2. Method in accordance with claim 1,
**characterized in that** at least one contact segment (11, 12, 21, 22) of an electrical conductor of the electrical device (10) or of the connection cable (20) is inserted into an inlet (41, 42, 43, 44, 141, 142, 143, 144) of the insulation element (40, 140) to a distance at which an insulating segment of the electrical conductor which connects to the contact segment (11, 12, 21, 22) penetrates the insulating element (40, 140).

3. Method in accordance with either claim 1 or 2,
**characterized in that** contact segments (11, 12, 21, 22) of more than one electrical conductor of the electrical device (10) are inserted far enough into inlets (41, 42, 43, 44, 141, 142, 143, 144) of the insulating element (40, 140) for the distance between the inlets (41, 42, 43, 44, 141, 142, 143, 144) to prevent a connection between the differing contact segments.

4. Method in accordance with any of claims 1 to 3,
**characterized in that** the electrical connection (51, 52) between the respective contact segments (11, 21, 12, 22) is established by means of welding, soldering, crimping, bonding or caulking.

5. Method in accordance with any of the preceding claims,
**characterized in that**, when at least one contact segment (11, 12, 21, 22) is inserted, the insulation element (40, 140) is positioned such that the distance between insulation element (40, 140) and tubular metal casing (13) of the electrical device (10) is smaller than the threefold of its diameter.

6. Method in accordance with claim 5,
**characterized in that**, when at least one contact segment (11, 12, 21, 22) is inserted, the insulation element (40, 140) is positioned such that the insulation element (40, 140) rests against the tubular metal casing (13) of the electrical device (10) or penetrates it.

7. Method in accordance with any of the preceding claims,
**characterized in that**, after the electrical connection (51, 52) is established, the at least one opening (46, 47, 49, 50, 146, 147, 149, 150) is at least partially closed.

8. Method in accordance with any of the preceding claims,
**characterized in that** a grounding of the electrical device (10) is realized by means of a connection to a ground conductor (25) of the connection cable (20) that extends outside of the insulation element (40).

9. Method in accordance with any of the preceding claims,
**characterized in that** the sleeve (30), after the electrical connections (51, 52) are established, is also positioned such that it is in contact with the tubular metal casing.

10. Method in accordance with claim 9,
**characterized in that** the sleeve (30), after having been positioned such that it is in contact with the tubular metal casing (13), is fixated on the tubular metal casing (13).

11. Method in accordance with any of the preceding claims,
**characterized in that** spaces between sleeve (30) and insulation element (40, 140) are completely or partially filled with silicone rubber or with an epoxy resin or are foam-filled or filled with an insulator.

12. Method in accordance with any of the preceding claims,
**characterized in that** the sleeve (30) is dimensioned and positioned such that the tubular metal casing (13) and the sleeve (30) are aligned so that either a radial overlapping between them does not exists or is smaller than the wall thickness of the tubular metal casing (13).

13. Electrical device (10) that comprises a tubular metal casing (13) and contact segments (11, 12) of electrical conductors of the electrical device (10) that extend out of the front side of the metal casing (13) and are connected to contact segments (21, 22) of electrical conductors (23, 24) of a connection cable (20), wherein the electrical device (10) further comprises an insulation element (40, 140), composed of an electrically insulating material, which has inlets (41, 42, 43, 44, 141, 142, 143, 144) for the insertion of at least one contact segment (11, 12) of an electrical conductor of the electrical device and of at least one contact segment (21, 22) of an electrical conductor (23, 24) of the connection cable (20), wherein the inlets (41, 42, 43, 44, 141, 142, 143, 144) transition into each other in a contact region (45, 48, 145, 148), wherein the insulation element (40, 140) comprises at least one further opening (46, 47, 49, 50, 146, 147, 149, 150) that provides further access to the contact region (45, 48, 145, 148), wherein an electrical connection (51, 52) is established between the respective contact segments (11, 21, 12, 22) in the region of the opening (46, 47, 49, 50, 146, 147,149, 150) that provides further access to the contact region (45, 48, 145, 148), **characterized in that** the insulation element (40, 140) is completely or partially enclosed by the sleeve (30).

14. Electrical device (10) in accordance with claim 13,
**characterized in that** the further opening (46, 47, 49, 50, 146, 147,149, 150) is a recess, a blind-end bore or a through-bore.

15. Electrical device (10) in accordance with claim 13 or 14,
**characterized in that** the further opening (46, 47, 49, 50, 146, 147,149, 150) of the insulation element (40, 140) is completely or partially filled, covered or closed.

16. Electrical device (10) in accordance with any of claims 13 to 15,
**characterized in that** the inlets (41, 42, 43, 44, 141, 142, 143, 144) for the insertion of at least one contact segment (11, 12) of an electrical conductor of the electrical device (10) and of at least one contact segment (21, 22) of an electrical conductor (23, 24) of the connection cable (20) guide the respective contact segments (11, 21, 12, 22) such that they overlap in the contact region (45, 48, 145, 148).

17. Electrical device (10) in accordance with any of claims 13 to 16,
**characterized in that** the inlets (43, 44, 143, 144) for the insertion of at least one contact segment (11, 12) of an electrical conductor of the electrical device (10) and the inlets (41, 42, 141, 142) for the insertion of at least one contact segment (21, 22) of an electrical conductor (23, 24) of the connection cable (20) have different cross sections.

18. Electrical device (10) in accordance with any of claims 13 to 17,
**characterized in that** the sleeve (30) is shorter than the threefold of the largest diameter of the tubular metal casing (13) and/or that the sleeve (30) does not extend, in a radial direction, beyond the tubular metal casing (13) either on the inside or on the outside.

19. Electrical device (10) in accordance with any of claims 13 to 18,
**characterized in that** the spaces between insulation element (40, 140) and sleeve (30) are at least partially filled with silicone rubber or epoxy resin or are foam-filled or filled with an insulator.

20. Electrical device (10) in accordance with any of claims 13 to 19,
**characterized in that** the sleeve (30) is in contact with the tubular metal casing (13) and is connected to it.

## Revendications

1. Procédé pour relier un dispositif électrique (10) comportant une enveloppe métallique tubulaire (13) et des segments de contact (11, 12) de conducteurs électriques du dispositif électrique (10), venant en saillie de côté frontal de l'enveloppe métallique tubulaire (13), avec des segments de contact (21, 22) de conducteurs électriques (23, 24) d'un câble de raccordement (20) comprenant les étapes suivantes consistant à :
- fournir un élément isolant (40, 140) réalisé en une matière électro-isolante ayant des logement (41, 42, 43, 44, 141, 142, 143, 144) pour introduire au moins un segment de contact (11, 12) d'un conducteur électrique du dispositif électrique (10) et d'au moins un segment de contact (21, 22) d'un conducteur électrique (23, 24) du câble de raccordement (20),
* les logements (41, 42, 43, 44, 141, 142, 143, 144) se rejoignant dans une zone de contact (45, 48, 145, 148) et formant au moins une ouverture (46, 47, 49, 50, 146, 147, 149, 150) qui permet un autre accès à la zone de contact (45, 48, 145, 148),
- introduire au moins un segment de contact (11, 12) d'un conducteur électrique du dispositif électrique (10) et au moins un segment de contact (21, 22) d'un conducteur électrique (23, 24) du câble de raccordement (20) dans les logements (41, 42, 43, 44, 141, 142, 143, 144) de l'élément isolant de façon que les segments de contact respectifs (11, 21, 12, 22) pénètrent dans la zone de contact (45, 48, 145, 148) ou se chevauchent dans celle-ci ou sont adjacents dans celle-ci, et
- réaliser une liaison électrique (51, 52) entre les segments de contact (11, 21, 12, 22) respectifs,
* la réalisation de ces liaisons électriques (51, 52) se faisant à travers l'ouverture (46, 47, 49, 50, 146, 147, 149, 150) qui forme un autre accès à la zone de contact (45, 48, 145, 148),
procédé **caractérisé en ce qu'**
on emmanche un manchon (30) sur le câble de raccordement (20) et après avoir réalisé la liaison électrique (51, 52) on le positionne pour entourer l'élément isolant (40, 140) totalement ou en partie.

2. Procédé selon la revendication 1,
caractérisé en qu'
on introduit au moins un segment de contact (11, 12, 21, 22) d'un conducteur électrique du dispositif électrique (10) ou du câble de raccordement (20) loin dans le logement (41, 42, 43, 44, 141, 142, 143, 144) de l'élément isolant (40, 140) pour qu'un segment isolant du conducteur électrique adjacent au segment de contact (11, 12, 21, 22) pénètre dans l'élément isolant (40, 140).

3. Procédé selon la revendication 1 ou 2,
**caractérisé en ce que**
les segments de contact (11, 12, 21, 22) de plus d'un conducteur électrique du dispositif électrique (10) sont engagés suffisamment loin dans les logements (41, 42, 43, 44, 141, 142, 143, 144) de l'élément isolant (40, 140) pour que la distance entre les logements (41, 42, 43, 44, 141, 142, 143, 144) évite le contact entre différents segments de contact.

4. Procédé selon l'une des revendications 1 à 3,
**caractérisé en ce que**
réaliser une liaison électrique (51, 52) entre les segments de contact (11, 21, 12, 22) respectifs consiste à souder, braser, sertir, coller ou mater.

5. Procédé selon l'une des revendications précédentes,
**caractérisé en ce que**
pour l'introduction d'au moins un segment de contact (11, 12, 21, 22), on positionne l'élément isolant (40, 140) pour que la distance entre l'élément isolant (40, 140) et l'enveloppe métallique tubulaire (13) du dispositif électrique (10) soit inférieure au triple de son diamètre.

6. Procédé selon la revendication 5,
**caractérisé en ce qu'**
à l'introduction d'au moins un segment de contact (11, 12, 21, 22), on positionne l'élément isolant (40, 140) pour que l'élément isolant (40, 140) pénètre ou vienne contre l'enveloppe métallique tubulaire (13) du dispositif électrique (10).

7. Procédé selon l'une des revendications précédentes,
**caractérisé en ce qu'**
après avoir réalisé la liaison électrique (51, 52) on ferme au moins partiellement une ouverture (46, 47, 49, 50, 146, 147, 149, 150).

8. Procédé selon l'une des revendications précédentes,
**caractérisé en ce que**
la mise à la masse du dispositif électrique (10) se fait en reliant à un conducteur de masse (25) du câble de raccordement (20) à l'extérieur de l'élément isolant (40).

9. Procédé selon l'une des revendications précédentes,
**caractérisé en ce qu'**
après avoir réalisé la liaison électrique (51, 52), on positionne le manchon (30) pour être en contact avec l'enveloppe métallique tubulaire (13).

10. Procédé selon la revendication 9,
**caractérisé en ce qu'**
après avoir positionné le manchon (30) pour qu'il soit en contact avec l'enveloppe métallique tubulaire (13), on le fixe à l'enveloppe métallique tubulaire (13).

11. Procédé selon l'une des revendications précédentes,
**caractérisé en ce qu'**
on remplit par coulée ou par expansion la cavité entre le manchon (30) et l'élément isolant (40, 140), totalement ou en partie avec du caoutchouc silicone ou une résine époxyde ou avec un agent isolant.

12. Procédé selon l'une des revendications précédentes,
**caractérisé en ce que**
le manchon (30) est dimensionné et positionné pour que l'enveloppe métallique tubulaire (13) et le manchon (30) soient alignés de façon à ne pas avoir entre eux un dépassement radial ou que celui-ci soit inférieur à l'épaisseur de paroi de l'enveloppe métallique tubulaire (13).

13. Dispositif électrique (10) comportant une enveloppe métallique tubulaire (13) et des segments de contact (11, 12) de conducteurs électriques du dispositif électrique (10) qui viennent en saillie du côté frontal de l'enveloppe métallique tubulaire (13), ces segments étant reliés à des segments de contact (21, 22) de conducteurs électriques (23, 24) d'un câble de raccordement (20),
- le dispositif électrique (10) comportant en outre un élément isolant (40, 140) en une matière électro-isolante, ayant des logement (41, 42, 43, 44, 141, 142, 143, 144) pour recevoir au moins un segment de contact (11, 12) d'un conducteur électrique du dispositif électrique et d'au moins un segment de contact (21, 22) d'un conducteur électrique (23, 24) du câble de raccordement (20),
- les logements (41, 42, 43, 44, 141, 142, 143, 144) se rejoignant dans une zone de contact (45, 48, 145, 148),
- l'élément isolant (40, 140) ayant au moins une autre ouverture (46, 47, 49, 50, 146, 147, 149, 150) qui permet un autre accès à la zone de contact (45, 48, 145, 148),
- une liaison électrique (51, 52) étant réalisée entre les segments de contact respectifs (11, 21, 12, 22) dans la zone de l'ouverture (46, 47, 49, 50, 146, 147, 149, 150) qui forme un autre accès à la zone de contact (45, 48, 145, 148),
dispositif électrique **caractérisé en ce que**
l'élément isolant (40, 140) est entouré totalement ou en partie par un manchon (30).

14. Dispositif électrique (10) selon la revendication 13,
**caractérisé en ce que**
l'autre ouverture (46, 47, 49, 50, 146, 147, 149, 150) est un évidement, un perçage borgne ou un perçage traversant.

15. Dispositif électrique (10) selon la revendication 13 ou 14,
**caractérisé en ce que**
l'autre ouverture (46, 47, 49, 50, 146, 147, 149, 150) de l'élément isolant (40, 140) est remplie, couverte ou fermée partiellement ou totalement.

16. Dispositif électrique (10) selon l'une des revendications 13 à 15,
**caractérisé en ce que**
les logements (41, 42, 43, 44, 141, 142, 143, 144) pour introduire au moins un segment de contact (11, 12) d'un conducteur électrique du dispositif électrique (10) et au moins un segment de contact (21, 22) d'un conducteur électrique (23, 24) du câble de raccordement (20), conduisent les segments de contact respectifs (11, 21, 12, 22) pour se chevaucher dans la zone de contact (45, 48, 145, 148).

17. Dispositif électrique (10) selon l'une des revendications 13 à 16,
**caractérisé en ce que**
les logements (43, 44, 143, 144) pour recevoir au moins un segment de contact (11, 12) d'un conducteur électrique du dispositif électrique (10) et les logements (41, 42, 141, 142) pour recevoir au moins un segment de contact (21, 22) d'un conducteur électrique (23, 24) du câble de raccordement (20) ont une section différente.

18. Dispositif électrique (10) selon l'une des revendications 13 à 17,
**caractérisé en ce que**
le manchon (30) est plus court que le triple du plus grand diamètre de l'enveloppe métallique tubulaire (13) et/ou que le manchon (30) ne dépasse de l'enveloppe métallique tubulaire (13), ni dans la direction radiale, ni vers l'extérieur ou vers l'intérieur.

19. Dispositif électrique (10) selon l'une des revendications 13 à 18,
**caractérisé en ce que**
les cavités entre l'élément isolant (40, 140) et le manchon (30) sont remplies au moins en partie avec du caoutchouc silicone ou une résine époxy ou sont munies d'un agent isolant expansé ou coulé.

20. Dispositif électrique (10) selon l'une des revendications 13 à 19,
**caractérisé en ce que**
le manchon (30) est en contact avec l'enveloppe métallique tubulaire (13) et est relié à celle-ci.
